(19) Europäisches Patentamt
European Patent Office
Office européen des brevets

(11) Veröffentlichungsnummer: **0 022 545**
**B1**

(12) **EUROPÄISCHE PATENTSCHRIFT**

(45) Veröffentlichungstag der Patentschrift: **13.06.84**

(51) Int. Cl.$^3$: **C 08 F 246/00,**
C 08 F 216/14

(21) Anmeldenummer: **80103891.0**

(22) Anmeldetag: **08.07.80**

(54) **Vinylpolymer mit Acetylacetoxygruppen, Verfahren zu seiner Herstellung und daraus erhaltenes Mittel.**

(30) Priorität: **11.07.79 DE 2927932**

(43) Veröffentlichungstag der Anmeldung:
**21.01.81 Patentblatt 81/3**

(45) Bekanntmachung des Hinweises auf die Patenterteilung:
**13.06.84 Patentblatt 84/24**

(84) Benannte Vertragsstaaten:
**AT BE CH DE FR GB IT LI NL SE**

(56) Entgegenhaltungen:
**DE - A - 1 644 990**
**DE - A - 2 535 372**

**Die Akte enthält technische Angaben, die nach dem Eingang der Anmeldung eingereicht wurden und die nicht in dieser Patentschrift enthalten sind.**

(73) Patentinhaber: **HOECHST AKTIENGESELLSCHAFT**
**Postfach 80 03 20**
**D-6230 Frankfurt am Main 80 (DE)**

(72) Erfinder: **Braun, Helmut, Dr.**
**Königsbergerstrasse 74**
**D-6239 Kriftel (DE)**
Erfinder: **Rinno, Helmut, Dr.**
**Goethestrasse 39**
**D-6238 Hofheim AM Taunus (DE)**
Erfinder: **Rauterkus, Karl Josef, Dr.**
**Im Hain 2**
**D-6233 Kelkheim (Taunus) (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

**EP 0 022 545 B1**

**Beschreibung**

Die Erfindung bezieht sich auf ein Vinylpolymer mit Acetylacetoxygruppen, Verfahren zu seiner Herstellung und daraus erhaltenes Mittel.

Es ist bekannt, daß ungesättigte Acetessigsäureester sich als Comonomere bei der Polymerisation von bestimmten ungesättigten Verbindungen eignen (vgl. z.B. Deutsche Offenlegungsschriften 25 35 372, 25 35 374 und 26 28 760). Dabei wird die Copolymerisation in einem wäßrigen Medium durchgeführt, so daß eine wäßrige Kunststoff-Dispersion resultiert. Solche Kunststoff-Dispersionen werden als Bindemittel-Dispersionen in Anstrichfarben verwendet (vgl. z.B. Deutsche Offenlegungsschrift 25 35 373).

Aufgabe der Erfindung ist nun die Schaffung eines Vinylpolymers mit Acetylacetoxygruppen, das aus einem ohne großen technischen Aufwand zugänglichen Monomer mit mindestens einer Acetylacetoxygruppe herstellbar ist und auch noch Einheiten eines anderen Vinylmonomers enthält.

Die Erfindung betrifft somit ein Verfahren zur Herstellung eines Vinylpolymers durch polymerisieren einer polymerisierbaren Acetylacetoxy-Verbindung zusammen mit mindestens einer anderen copolymerisierbaren olefinisch ungesättigten Verbindung unter üblichen Bedingungen, das dadurch gekennzeichnet istk daß man

A. einen Acetylacetoxyalkyl-allyl-ether der Formel (V)

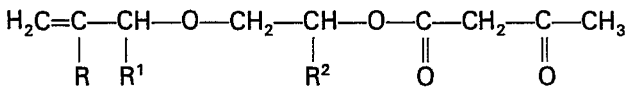

oder der Formel (VI)

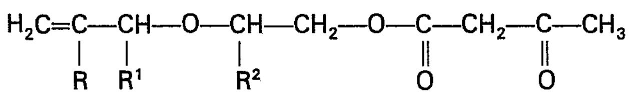

worin R ein Wasserstoffatom oder einen Methylrest, $R^1$ ein Wasserstoffatom oder einen Alkylrest mit 1, 2 oder 3 Kohlenstoffatomen und $R^2$ ein Wasserstoffatom oder einen—gegebenenfalls ein oder mehrere Sauerstoffatome oder ein Halogenatom enthaltenden—Kohlenwasserstoffrest mit 1 bis 8 Kohlenstoffatomen bedeuten, oder ein Gemisch dieser Ether zusammen mit

B. mindestens einer olefinisch ungesättigten Verbindung der Formel (XI)

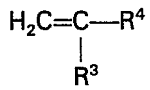

in der $R^3$ ein Wasserstoffatom oder ein Methylrest ist und $R^4$ (a) ein Wasserstoffatom oder einen Alkylrest mit 1 bis 5 Kohlenstoffatomen, (b) einen carbocyclischen oder heterocyclischen Rest mit 5 oder 6 Ringgliedern, (c) einen Alkoxyrest mit 1 bis 4 Kohlenstoffstomen, (d) einen Alkylcarboxyrest mit 2 bis 18 Kohlenstoffatomen, (e) eine Nitrilgruppe, (f) ein Halgogenatom, (g) eine Carboxylgruppe oder Sulfogruppe, (h) einen Alkoxycarbohylrest mit 2 bis 12 Kohlenstoffatomen, (i) einen Aminocarbonylrest oder (k) einen Vinylrest bedeutet, wobei das Gewichtsverhaltnis der Komponente A zur Komponente B 1:200 bis 1:10 beträgt, polymerisiert.

Erfindungsgemäß wird insbesondere ein Acetylacetoxyalkylallyl-ether der Formel (VII)

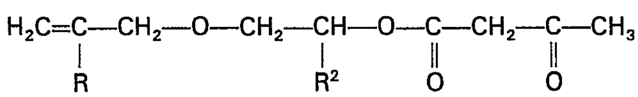

oder der Formel (VIII)

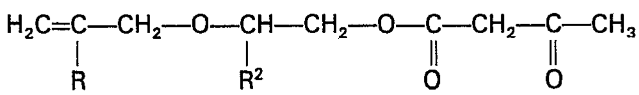

oder ein Gemisch dieser Ether verwendet, in denen R ein Wasserstoffatom oder einen Methylrest und $R^2$ (a) ein Wasserstoffatom, (b) einen Alkylrest mit 1, 2 oder 3 Kohlenstoffatomen, der mit einem Halogenatom, vorzugsweise mit einem Chloratom, einem Hydroxylrest, einem Acyloxyrest mit 3 bis 6

Kohlenstoffatomen oder einer Acetylacetoxygruppe substituiert sein kann, oder (c) einen Arylrest mit 6, 7 oder 8 Kohlenstoffatomen, vorzugsweise einen Phenylrest, bedeuten.

Die Erfindung betrifft ferner ein Vinylpolymer mit Acetylacetoxygruppen, erhältlich nach dem vorstehend beschriebenen Verfahren, unter Verwendung von Verbindungen des Formeln V und VI.

Der Rest $R^1$ bedeutet vorzugsweist ein Wasserstoffatom, während der Rest $R^2$ vor zugsweise (a) ein Wasserstoffatom, (b) ein Alkylrest mit 1, 2 oder 3 Kohlenstoffatomen, der ein Halogenatom, einen Hydroxylrest, einen Acyloxyrest mit 3 bis 6 Kohlenstoffatomen oder eine Acetylacetoxygruppe enthalten kann, oder (c) ein Arylrest mit 6, 7 oder 8 Kohlenstoffatomen ist.

Die Erfindung betrifft insbesondere ein Vinylpolymer mit Acetylacetoxygruppen, enthaltlich aus Verbindungen des Formeln VII und VIII.

Weiterer Gegenstand der Erfindung ist außerdem eine Variante des vorstehend beschriebenen Verfahrens zur Herstellung eines Vinylpolymers, dadurch gekennzeichnet, daß man die Polymerisation in wäßriger Emulsion bei einer Temperatur von 20 bis 100°C in Gegenwart eines Initiators und gegebenenfalls in Gegenwart eines Emulgators und/oder eines Schutzkolloids durchführt.

Gegenstand der Erfindung ist ferner eine Polymer-Dispersion, erhältlich nach obigem Verfahren, sowie deren Verwendung als Grundlage für Anstrichfarben.

Erfindungsgemäß eingesetzte Acetylacetoxyalkyl-allyl-ether sind beispielsweise [2-(Acetylacetoxy)-ethyl]-allyl-ether, [2-(Acetylacetoxy)-ethyl]-methallyl-ether, [2-(Acetylacetoxy)-ethyl]-1-methylallyl-ether, [2-(Acetylacetoxy)-ethyl]-1-ethylallyl-ether, [2-(Acetylacetoxy)-ethyl]-1-propylallyl-ether, [2-(Acetylacetoxy)-propyl]-allyl-ether, [2-(Acetylacetoxy)-propyl]-methallyl-ether, [2-(Acetylacetoxy)propyl]-1-methylallyl-ether sowie [2-(Acetylacetoxy)-2-chlormethyl]-ethyl-allylether, [2-(Acetylacetoxy)-2-hydroxymethyl]-ethyl-allyl-ether, [2-(Acetylacetoxy)-2-phenyl]-ethyl-allyl-ether, [2-(acetylacetoxy)-2-p-tolyl]-ethyl-allyl-ether, 2,3-Bis(acetylacetoxy)-propyl-allyl-ether, (2-Acetylacetoxy-3-acryloyloxy-propyl)-allyl-ether, (2-Acetylacetoxy-3-methacryloyloxy-propyl)-allyl-ether und die entsprechenden Methallylether.

Die Herstellung der erfindungsgemäß verwendeten Verbindungen mit mindestens einer Acetylacetoxygruppe ist auf verschiedenen Wegen möglich. Beispielsweise kann eine Williamson-Synthese durchgeführt werden (a) mit einem Alkalisalz eines—gegebenenfalls substituierten—(2-Hydroxyethyl)-acetessigsäureesters und einem—gegebenenfalls substituierten—Allylhalogenid oder (b) in ungekehrter Weise mit einem—gegebenenfalls substituierten—(2-Halogenethyl)-acetessigsäureester und einem—gegebenenfalls substituierten—Alkali-allylalkoholat. Ferner kann man in analoger Weise zunächst einen—gegebenenfalls substituierten—Allyl-glykol-ether herstellen, diesen in den Allylglykol-essigsäureester überführen und letzteren dann mittels einer Claisen-Kondensation mit Essigsäureethylester umsetzen.

Auf besonders einfache und bevorzugte Weise sind die erfindungsgemäß verwendeten Monomeren dadurch herzustellen, daß man zunächst einen—gegebenenfalls substituierten—Allylalkohol mit einem Epoxid und den erhaltenen Hydroxy-alkyl-allyl-ether dann mit Diketen umsetzt. Hierbei wird als Allylalkohol vorzugsweise ein Alkohol der Formel (IX)

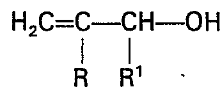

verwendet, in der R und $R^1$ die bei Formel (V) genannten Bedeutungen haben. Geeignete Alkohole sind vorzugsweise allylalkohol selbst und Methallylalkohol. Weitere Beispiele sind 1-Methylallylalkohol, 1-Ethylallylalkohol, 1-Propylallylalkohol und 1,2-Dimethylallylalkohol. Als Epoxid wird ein Epoxid der Formel (X)

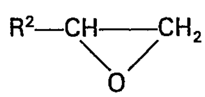

eingesetzt, in der $R^2$ die bei Formel (V) genannte Bedeutung hat. Besonders geeignete Epoxide sind solche der Formel (X), in der $R^2$ ein Wasserstoffatom, einen Alkylrest mit 1, 2 oder 3 Kohlenstoffatomen, der mit einem Halogenatom, vorzugsweise mit einem Chloratom, einen Hydroxylrest oder einem Acylrest mit 3 bis 6, vorzugsweise 3 oder 4 Kohlenstoffatomen, substituiert sein kann, oder einen Arylrest mit 6, 7 oder 8 Kohlenstoffatomen, vorzugsweise einen Phenylrest, bedeutet. Als Beispiele sind vor allem zu nennen Ethylenoxid, Propylenoxid, Glycid, Epichlorhydrin, Styroloxid und Glycidylester wie Glycidylacrylat, Glycidylmethacrylat und Glycidylcrotonat.

Die Reaktion zwischen dem Alkohol und dem Epoxid wird unter üblichen Bedingungen, vorzugsweise in Substanz, durchgeführt. Die Reaktionstemperatur beträgt dabei 0 bis 120°C, vorzugsweise 20 bis 100°C. Üblicherweise wird bei Normaldruck gearbeitet; ist jedoch ein Reaktionspartner bei der jeweiligen Reaktionstemperatur gasförmig, so kann die Umsetzung auch bei erhöhtem Druck durchgeführt werden. Die Reaktion wird in Abwesenheit eines Katalysators oder vorzugsweise in Gegenwart eines Katalysators durchgeführt, der dann in einer Menge von 0,01 bis 2 Gewichtsprozent,

vorzugsweise 0,02 bis 0,5 Gewichtsprozent (bezogen auf die Gesamtmenge der Reaktanten) eingesetzt wird. Als Katalysator eignen sich vor allem stark alkalisch reagierende Substanzen, insbesondere a) Alkalimetalle, z.B. Natrium, Kalium und Lithium, (b) Alkalialkoholate, vorzugsweise mit 1 bis 4 Kohlenstoffatomen, z.B. Natriummethylat, Natriumethylat, Natriumpropylat, Natrium-t-butylat und die analogen Kaliumverbindungen, sowie insbesondere die Alkalialkoholate der jeweils verwendeten ungesättigten Alkohole, z.B. Natriumallylalkoholat und Natriummethallylalkoholat, und (c) aliphatische Amine, vorzugsweise Trialkylamine mit 3 bis 9 Kohlenstoffatomen, z.B. Trimethylamin, Triethylamin, Triethanolamin, und cyclische Amine, z.B. Pyridin, Piperidin, Morpholin und Piperazin. Ebenfalls geeignet sind sauer reagierende Verbindungen, insbesondere anorganische Säuren, z.B. Salzsäure, Schwefelsäure, Salpetersäure, Phosphorsäure, sowie Lewis-Säuren, z.B. Bortrifluorid und Phosphortrichlorid, die auch in Form ihrer Additionsverbindungen eingesetzt werden können, z.B. als Etherate.

Die Umsetzung des in der ersten Reaktionsstufe erhaltenen Hydroxylalkyl-allyl-ethers mit Diketen wird ebenfalls unter üblichen Bedingungen, vorzugsweise in Substanz, durchgeführt, wobei die Reaktionstemperatur im Bereich von 0 bis 120°C, vorzugsweise 20 bis 100°C, liegt. Die Umsetzung erfolgt in der Regel bei Normaldruck; es kann aber auch erhöhter Druck angewendet werden. Empfehlenswert ist die Durchführung der Reaktion in Gegenwart eines Katalysators, der in einer Menge von 0,02 bis 2 Gewichtsprozent, vorzugsweise 0,02 bis 0,5 Gewichtsprozent eingesetzt wird (bezogen auf die Gesamtmenge der Reaktanten). Als Katalysator dienen hier (a) Säuren, (b) saure Salze, (c) Basen oder (d) basische Salze, z.B. Schwefelsäure, Phosphorsäure, p-Tolulsolfonsäure, Natriumhydrogensulfat, Triethylamin, Triethanolamin und Trimethylammoniumacetat.

Die Herstellung der Monomeren mit mindestens einer Acetylacetoxygruppe wird durch die nachstehenden Vorschriften illustriert:

Vorschrift 1

a) 58,1 g (1 mol) Allylalkohol werden in einem Vierhalskolben, der mit Rührer, Thermometer, Tropftrichter und Rückflußkühler versehen ist, mit 200 mg blankem metallischen Natrium versetzt und dann zum Sieden (97°C) erhitzt. Nach Auflösung des Natriums werden dem siedenden Allylalkohol im Laufe von 2 h unter Rühren 61 g (1,05 mol) propylenoxid gleichmäßig zugegeben. Nach einer anschließenden Nachreaktionszeit von 1 h bei 97°C wird das Reaktionsgemisch bei einem Druck von 2 mbar destilliert. Es werden 65 g (55% der Theorie) 2-Hydroxypropyl-(1)-allyl-ether mit einem Siedepunkt von 67°C bei 2 mbar und einem Brechungsindex $n_D^{20}=1{,}4355$ erhalten.

b) In dem oben beschriebenen Reaktionsgefäß werden 58,1 g (0,5 mol) 2-hydroxypropyl-(1)-allylether mit 0,03 g Trimethylammoniumacetat versetzt und auf eine Temperatur von 75°C erhitzt. Unter Einhaltung dieser Temperatur werden dann unter Rühren im Laufe von 30 min 42 g (0,5 mol) Diketen zu der Vorlage getropft. Nach einer anschließenden Nachreaktionszeit von 1 h bei 75°C wird das Reaktionsgemisch auf Raumtemperatur abgekühlt. Es werden 100 g 2-Acetylacetoxypropyl-(1)-allylether als leicht gelbe Flüssigkeit mit einem Brechungsindex $n_D^{20}=1{,}4450$ erhalten.

Vorschrift 2

In einem Vierhalskolben, der mit Rührer, Thermometer, Tropftrichter und Rückflußkühler versehen ist, wird ein Gemisch aus 1320 g (10 mol) 2,3-Dihydroxypropyl-(1)-allyl-ether und 9 g metallischem Natrium auf eine Temperatur von 70°C erhitzt, wobe sich das Natrium auflöst, und unter Einhaltung dieser Temperatur unter Rühren im Laufe von 2 h gleichmäßig mit 1680 g (20 mol) Diketen versetzt. Nach einer anschließenden Nachreacktionszeit von 1 h bei 80°C wird das Reaktionsgemisch auf Raumtemperatur abgekühlt. Es werden 3000 g 2,3-Bis(acetylacetoxy)-propyl-(1)-allyl-ether als gelbe, ölige Flüssigkeit mit einem Brechungsindex $n_D^{20}=1{,}4625$ erhalten.

Die erfindungsgemäße Polymerisation wird unter üblichen Bedingungen in Substanz, in Lösung oder vorzugsweise in Emulsion durchgeführt. Die Polymerisationstemperatur beträgt —30 bis 200°C, vorzugsweise 20 bis 100°C.

Das Monomer mit mindestens einer Acetylacetoxygruppe wird zusammen mit mindestens einer olefinisch ungesättigten Verbindung polymerisiert. Das Gewishtsverhältnis von Acetylacetoxymonomer zu Comonomer beträgt dabei 1:200 bis 1:10, vorzugsweise 1:100 bis 1:20.

Gemäß dem beanspruchten Verfahren verwendete Comonomere sind olefinisch ungesättigte Verbindungen der Formel (XI)

$$\begin{array}{l} H_2C=C-R^4 \\ \qquad\;\, | \\ \qquad\; R^3 \end{array}$$

in der $R^3$ ein Wasserstoffatom oder ein Methylrest ist und $R^4$ (a) ein Wasserstoffatom oder einen Alkylrest mit 1 bis 5 Kohlenstoffatomen, (b) einen carbocyclischen oder heterocyclischen Rest mit 5 oder 6 Ringgliedern, (c) einen Alkoxyrest mit 1 bis 4 Kohlenstoffatomen, (d) einen Alkylcarboxyrest mit 2 bis 18, vorzugsweise 2 bis 10 Kohlenstoffatomen, (e) eine Nitrilgruppe, (f) ein Halogenatom, vorzugsweise ein Chloratom, (g) eine Carboxylgruppe oder Sulfogruppe, (h) einen Alkoxycarbonylrest

mit 2 bis 12, vorzugsweise 2 bis 9 Kohlenstoffatomen, (i) einen Aminocarbonylrest oder (k) einen Vinylrest bedeutet.

Als Beispiele für solche copolymerisierbaren Verbindungen seinen genannt (a) Olefine, z.B. Ethylen, Propylen und Isobutylen, (b) Styrol, N-Vinylpyrrolidon und Vinylpyridin, (c) Vinylether, z.B. Vinylmethylether, Vinylethylether und Vinyl-n-butylether, (d) Vinylester von aliphatischen Carbonsäuren mit 2 bis 18, vorzugsweise 2 bis 10 Kohlenstoffatomen, z.B. Vinylacetat, Vinylpropionat, Vinylbutyrat, Vinylpivalat, Vinylisononat, Vinyllaurat und Vinyldecanate sowie Vinylester eines Gemischens von Monocarbonsäuren mit 9 bis 11 Kohlenstoffatomen, (e) Acrylnitril und Methacrylnitril, (f) Vinylhalogenide, z.B. Vinylchlorid und Allylchlorid, (g) ungesättigte Monocarbonsäuren, z.B. Acrylsäure Methacrylsäure und Vinylsulfonsäure, (h) Acrylsäureester oder Methacrylsäureester von einwertigen Alkanolen mit 1 bis 11, vorzugsweise 1 bis 8 Kohlenstoffatomen, z.B. Methylacrylat, Ethylacrylat, Butylacrylat, 2-Ethylhexylacrylat, Methylmethacrylat, Ethylmethacrylat, Butylmethacrylat, Hexylmethacrylat, Octylmethacrylat und 2-Ethylhexylmethacrylat, (i) Acrylsäureamide und Methacrylsäureamide, z.B. Acrylsäureamid, N-Methylolacrylsäureamide, Methacrylsäureamid und N-Methylolmethacrylsäureamid, und (k) Diolefine mit 4 oder 5 Kohlenstoffatomen, z.B. Butadien und Isopren. Ebenfalls geeignete Comonomere sind Maleinsäurediester und Fumarsäurediester, insbesondere von einwertigen Alkanolen mit 2 bis 10, vorzugsweise 3 bis 8 Kohlenstoffatomen, z.B. Dibutylmaleinat, Dihexylmaleinat, Dioctylmaleinat, Dibutylfumarat, Dihexylfumarat und Dioctylfumarat.

Besonders geeignete Comonomere sind die unter (d) genannten Vinylester und die unter (h) erwähnten Acrylsäure ester oder Methacrylsäureester.

Bei Verwendung von zweit copolymerisierbaren Verbindungen zur Herstellung von Terpolymeren werden die vorgenannten besonders geeigneten Comonomeren bevorzugt eingesetzt, gegebenenfalls im Gemisch mit Styrol oder Maleinsäurediestern. Solche Comonomerkombinationen werden beispielsweise gebildet aus einem Acrylsäureester und einem Methacrylsäureester, einem Acrylsäureester und Styrol, einem Acryl- oder Methacrylsäureester und einem Vinylester, einem Vinylester und einem Maleinsäurediester sowie einem Gemisch verschiedener Vinylester, insbesondere Vinylacetat und Vinylestern eines Gemisches von Monocarbonsäuren mit 9 bis 11 Kohlenstoffatomen.

Die Polymerisation erfolgt üblicherweise in Gegenwart eines radikalbildenden Initiators, vorzugsweise einer Peroxidverbindung oder einer aliphatischen Azoverbindung. Der Initiator ist öllöslich oder vorzugsweise wasser löslich; er wird in einer Menge von 0,05 bis 2 Gewidhtsprozent, vorzugsweist 0,1 bis 1 Gewichtsprozent eingesetzt (bezogen auf die Gesamtmenge der Monomeren). Es eignen sich insbesondere Wasserstoffperoxid, Alkali- oder Ammonium-salze der Peroxydischwefelsäure oder der Peroxdiphosphorsäure, z.B. Natriumperoxydisulfat, Kaliumperoxydisulfat und Ammoniumperoxydisulfat, ferner Alkylhydroperoxide wie t-Butylhydroperoxid, Dialkylperoxide wie Di-t-butylperoxid, Diacylperoxide wie Diacetylperoxid, Dilauroylperoxid und Dibenzoylperoxid, sowie Azodiisobuttersäurenitril, Azodicarbonamid und Azo-$\gamma$, $\gamma'$-bis(4-cyanvaleriansäure). Der Initiator wird gegebenenfalls zusammen mit einem Reduktionsmittel eingesetzt, insbesondere mit einem Alkalisalz oder Erdalkalisalz einer reduzierend wirkenden schwefelhaltigen Säure; vorzugsweise eignen sich Sulfite, Bisulfite, Pyrosulfite, Dithionite, Thiosulfate und Formaldehydsulfoxylate. Gleichfalls verwendbar sind auch Glukose und Askorbinsäure.

Gegebenenfalls wird die Polymerisation in Anwesenheit von Emulgatoren durchgeführt. Hierbei werden nichtionische und/oder ionische Emulgatoren verwendet. Dabei beträgt die Menge des nichtionischen Emulgators bis zu 6 Gewichtsprozent, vorzugsweise 0,1 bis 4 Gewichtsprozent, und die des ionischen Emulgators bis zu 3 Gewichtsprozent, vorzugsweise 0,1 bis 2 Gewichtsprozent (jeweils bezogen auf die Gesamtmenge der Monomeren). Bevorzugt ist der Einsatz eines Gemisches aus einem nicht-ionischen Emulgator und einem ionischen Emulgator.

Als nicht-ionische Emulgatoren eignen sich insbesondere Polyglykolether von langkettigen aliphatischen Akoholen, die vorzugsweise 10 bis 20 Kohlenstoffatome aufweisen, oder von Alkylphenolen, deren Alkylrest vorzugsweise 6 bis 12 Kohlenstoffatome enthält, oder von Dialkylphenolen oder Trialkylphenolen, deren Alkylreste vorzugsweise verzweigte Alkylreste mit jeweils 3 bis 12 Kohlenstoffatomen darstellen. Beispiele hierfür sind Umsetzungsprodukte von Ethylenoxid mit Laurylalkohol, Stearylalkohol, Oleylalkohol, Kokosfettalkohol, Octylphenol, Nonylphenol, Diisopropylphenol, Triisopropylphenol, Di-t-butylphenol und Tri-t-butylphenol. Reaktionsprodukte des Ethylenoxids mit Polypropylenglykol oder Polybutylenglykol sind ebenfalls geeignet.

Als ionische Emulgatoren sind vor allem anionische Emulgatoren geeignet, insbesondere Alkali- oder Ammoniumsalze von Alkylsulfonaten, Arylsulfonaten oder Alkylarylsulfonaten sowie von den entsprechenden Sulfaten, Phosphaten oder Phosphonaten, die gegebenenfalls Oxyethylen-Einheiten zwischen dem jeweiligen Kohlenwasserstoffrest und der anionischen Gruppe aufweisen. Beispiele hierfür sind Natriumlaurylsulfat, Natriumoctylphenolglykolethersulfat, Natriumdodecylbenzolsulfonat, Natriumlauryldiglykolsulfat, Ammoniumtri-t-butylphenylpentaglykolsulfat und Ammoniumtri-t-butylphenoloctaglykolsulfat.

Das erfindungsgemäße Verfahren wird gegebenenfalls in Gegenwart eines üblichen Schutzkolloids durchgeführt. Als Schutzkolloide eignen sich beispielsweise Polyvinylpyrrolidon, Poly-N-vinylacetamid, Polyvinylalkohol, Copolymere des N-Vinyl-N-methyl-acetamids mit Acrylsäureestern oder mit Maleinsäureestern, ferner Cellulose-derivate, insbesondere Methylcellulose, Ethylcellulose,

Hydroxyethylcellulose und Carboxymethylcellulose, sowie Gummi arabicum, Stärke und Alginate. Gemischeverschiedener Schutzkolloide sind oft bevorzugt. Die Menge des Schutzkolloids oder des Schutzkolloidgemisches beträgt im allgemeinen 0,5 bis 4 Gewichtsprozent, vorzugsweise 0,6 bis 2 Gewichtsprozent (bezogen auf die Gesamtmenge der Monomeren).

Das erfindungsgemäße Polymerisationsverfahren wird in Substanz oder Lösung oder bevorzugt in einem wäßrigen Medium durchgeführt. Die resultierenden Polymer-Dispersionen weisen einen Feststoffgehalt von 20 bis 70 Gewichtsprozent, vorzugsweise von 40 bis 60 Gewichtsprozent, auf.

Die erfindungsgemäß erhaltenen Polymer-Dispersionen eignen sich insbesondere als Grundlage für Anstrichfarben, die auf nichtsaugenden, glatten Untergründen eine gegenüber herkömmlichen Produkten stark verbesserte Naßhaftung aufweisen. Ferner ist die Wetterbeständigkeit der mit diesen Anstrichfarben hergestellten Filme und die mechanische Abriebfestigkeit bei Feuchtigkeitseinwirkung in aller Regel deutlich erhöht.

Die Erfindung wird durch die folgenden Beispiele näher erläutert. Die Angabe "%" bedeutet jeweils "Gewichtsprozent".

Beispiel 1

In einem Vierhalskolben mit Thermometer, Tropftrichter, Rückflußkühler und Rührer werden unter Rühren bei Raumtemperature 3 g Nonylphenolpolyglykolether mit 30 Oxyethylen-Einheiten, 0,15 g Natriumethensulfonat, 0,25 g Natriumacetat und 2,5 g Hydroxyethylcellulose mit einem mittleren Molekulargewicht von 100 000 (mittlerer Polymerisationsgrad 400) in 98,7 g Wasser gelöst. Zu dieser Lösung werden 7,5% eines Gemisches aus 74 g Vinylacetat, 26 g eines handelsüblichen Gemisches von Decansäurevinylestern und 2,5 g (2-Acetylacetoxy-propyl)-allyl-ether hinzugefügt, und das erhaltene Gemisch wird auf eine Temperatur von 50°C erhitzt. Nach Zugabe von 0,2 g Ammoniumperoxydisulfat, gelöst in 5 g Wasser, wird die Temperatur des Gemisches auf 70°C erhöht. Dann werden unter Beibehalten der Temperatur von 70°C die restlichen 92,5% des vorgenannten Monomerengemisches im Laufe von 2,5 Stunden gleichmäßig zugegeben. Anschließend wird das Gemisch noch mit einer Lösung von 0,1 9 Ammoniumperoxydisulfat in 2,5 g Wasser versetzt, eine weitere Stunde auf einer Temperatur von 70°C gehalten und dann auf Raumtemperatur abgekühlt. Die erhaltene Polymerdispersion hat einen Feststoffgehalt von 50%.

Beispiel 2

In einem Vierhalskolben mit Thermometer, Tropftrichter, Rückflußkühler und Rührer wird unter Rühren bei Raumtemperatur eine Lösung von 1,35 g 1-(Isooctyl)-phenyl-2-$\beta$-(natriumsulfonato)-ethylglykol (ISG) und 0,15 g Ammoniumperoxydisulfat in 290 g Wasser mit 30% einer Emulsion aus 360 g Wasser, 5 g ISG, 15 g Methacrylsäure, 405 g Butylacrylat, 338 g Methylmethacrylat, 22,5 g [2,3-Bis(acetylacetoxy)-propyl]-allylether und 1,35 g Ammoniumperoxydisulfat vermischt. Das erhaltene Gemisch wird auf eine Temperatur von 75°C erhitzt, und unter Beibehalten der Temperatur von 75°C werden die restlichen 70% der vorgenannten Emulsion, der vorher noch 22 g ISG zugefügt worden sind, im Laufe von 2,5 Stunden gleichmäßig zugegeben. Danach wird das Gemisch noch weitere 2,5 Stunden auf einer Temperatur von 75°C gehalten, wobei nach einer und nach zwei Stunden nach Beendigung der Emulsionszugabe jeweils eine Lösung von 0,2 g Ammoniumperoxydisulfat in 5 g Wasser zugefügt werden. Anschließend wird das Gemisch auf Raumtemperatur abgekühlt. Die erhaltene Polymerdispersion hat einen Feststoffgehalt von 50%.

Anwendungsbeispiel

Aus der nach Beispiel 1 erhaltenen Dispersion wird nach folgender Rezeptur ein Anstrichmittel hergestellt:

| | |
|---|---|
| a) Wasser | 41,0 |
| 3-%ige wäßrige Lösung einer handelsüblichen Hydroxyethylcellulose | 15,6 g |
| Natrium-Polyphosphat | 0,4 g |
| 30-%ige wäßrige Lösung eines handelsüblichen Ammonium-Polyacrylats mit einer Viskosität von ca. 200 mPa · s (nach Epprecht B II, 23°C) | 3,0 g |
| wäßrige Ammonialklösung, 25 %ig | 1,0 g |
| handelsüblicher Entschäumer auf Silikonölbasis | 3,0 g |
| b) Titandioxid (Korngröße 0,2 bis 0,4 $\mu$m) | 175,0 g |
| c) 1,2-Propylenglykol | 10,0 g |
| d) Dispersion nach Beispiel 1 | 710,0 g |
| e) Butyldiglykolacetat | 10,0 g |
| 1,2-Propylenglykol | 27,0 g |

In einem Rührgefäß werden zunächst die Komponenten von a) in der genannten Reihenfolge vorgelegt. In dieser Vorlage wird dann b) mit Hilfe eines Dissolvers dispergiert, und das erhaltene Gemisch wird mit c) versetzt. Nach Zugabe von d) wird schließlich das Gemisch e) langsam eingerührt.

**Patentansprüche**

1. Verfahren zur Herstellung eines Vinylpolymers durch Polymerisieren einer polymerisierbaren Acetylacetoxy-Verbindung zusammen mit mindestens einer anderen copolymerisierbaren olefinisch ungesättigten Verbindung unter üblichen Bedingungen, dadurch gekennzeichnet, daß man

A. einen Acetylacetoxyalkyl-allyl-ether der Formel (V)

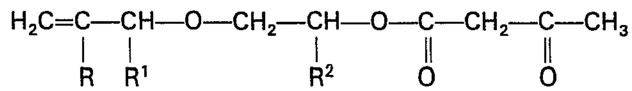

oder der Formel (VI)

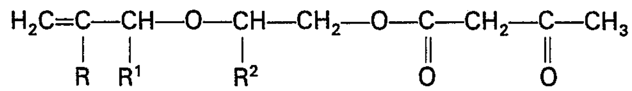

worin R ein Wasserstoffatom oder einen Methylrest, $R^1$ ein Wasserstoffatom oder einen Alkylrest mit 1, 2 oder 3 Kohlenstoffatomen und $R^2$ ein Wasserstoffatom oder einen—gegebenenfalls ein oder mehrere Sauerstoffatome oder ein Halogenatom enthaltenden—Kohlenwasserstoffrest mit 1 bis 8 Kohlenstoffatomen bedeuten, oder ein Gemisch dieser Ether zusammen mit

B. mindestens einer olefinisch ungesättigten Verbindung der Formel (XI)

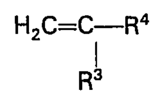

in der $R^3$ ein Wasserstoffatom oder ein Methylrest ist und $R^4$ (a) ein Wasserstoffatom oder einen Alkylrest mit 1 bis 5 Kohlenstoffatomen, (b) einen carbocyclischen oder heterocyclischen Rest mit 5 oder 6 Ringgliedern, (c) einen Alkoxyrest mit 1 bis 4 Kohlenstoffatomen, (d) einen Alkylcarboxyrest mit 2 bis 18 Kohlenstoffatomen, (e) eine Ntrilgruppe, (f) ein Halogenatom, (g) eine Carboxylgruppe oder Sulfogruppe, (h) einen Alkoxycarbonylrest mit 2 bis 12 Kohlenstoffatomen, (i) einen Aminocarbonylrest oder (k) einen vinylrest bedeutet, wobei das Gewichtsverhältnis der Komponente A zur Komponente B 1:200 bis 1:10 beträgt, polymerisiert.

2. Verfahren nach Anspruch 1, dadurch gekennzeichnet, daß man die Polymerisation in wäßriger Emulsion bei einer Temperatur von 20 bis 100°C in Gegenwart eines Initiators und gegebenenfalls in Gegenwart eines Emulgators und/oder eines Schutzkolloids durchführt.

3. Vinylpolymer, erhältlich nach dem Verfahren gemäß Anspruch 1.

4. Polymer-Dispersion, erhältlich nach dem Verfahren gemäß Anspruch 2.

5. Verwendung der Polymer-Dispersion gemäß Anspruch 4 als Grundlage für Anstrichfarben.

**Revendications**

1. Procédé de préparation d'un polymère vinylique par polymérisation, dans les conditions usuelles, d'un composé polymérisable de type acétylacétoxy avec au moins un autre composé copolymérisable, à insaturation oléfinique, procédé caractérisé en ce qu'on polymérise:

A) un éther-oxyde d'allyle et d'acétyloxyalkyle de formule (V):

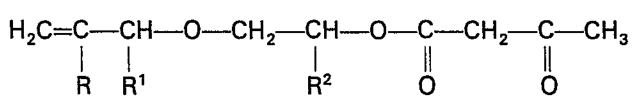
(V)

ou de formule (VI):

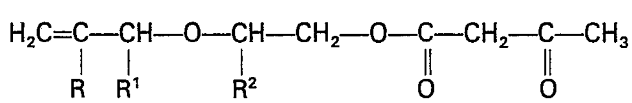
(VI)

(dans laquelle R représente un atome d'hydrogène ou un radical méthyle, $R^1$ un atome d'hydrogène ou un radical alkyle ayant 1, 2 ou 3 atomes de carbone et $R^2$ un atome d'hydrogène

ou un radical hydrocarboné comportant 1 à 8 atomes de carbone et qui contient éventuellement un ou plisueurs atomes d'oxygène ou un atome d'halogène), ou un mélange de ces éthers, avec

B) au moins un composé à insaturation oléfinique, de formule (XI):

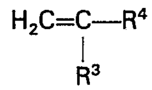

(XI)

(dans laquelle $R^3$ représente un atome d'hydrogène ou un radical méthyle et $R^4$ représente (a) un atome d'hydrogène ou un radical alkyle comportant 1 à 5 atomes de carbone, (b) un radical carbocyclique ou hétérocyclique comportant 5 ou 6 chaînons de cycle, (c) un radical alcoxy comportant 1 à 4 atomes de carbone, (d) un radical alkylcarboxy comportant 2 à 18 atomes de carbone, (c) un groupe nitrile, (f) un atome d'halogène, (g) un groupe carboxyle ou un groupe sulfo, (h) un radical alcoxycarbonyle comportant 2 à 12 atomes de carbone, (i) un radical aminocarbonyle ou (k) un radical vinyle), le rapport pondéral du constituant A au constituant B se situant entre 1:200 et 1:10.

2. Procédé selon la revendication 1, caractérisé en ce qu'on effectue la polymérisation en émulsion aqueuse à une température de 20 à 100°C en présence d'un amorceur et éventuellement en présence d'un émulsifiant et/ou d'un colloïde protecteur.

3. Polymère vinylique, caractérisé en ce qu'il peut être obtenu par le procédé selon la revendication 1.

4. Dispersion de polymère, caractérisée en ce qu'elle peut être obtenue par le procédé selon la revendication 2.

5. Utilisation de la dispersion de polymère selon la revendication 4 comme base pour des peintures.

**Claims**

1. Process for the preparation of a vinyl polymer by polymerizing a polymerizable acetylacetoxy compound together with at least one further copolymerizable olefinically unsaturated compound under common conditions, which comprises polymerizing

A. an acetylacetoxyalkyl-allyl ether of formula (V)

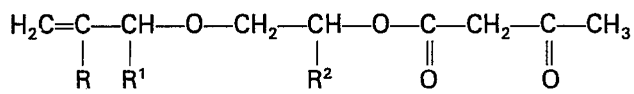

or of formula (VI)

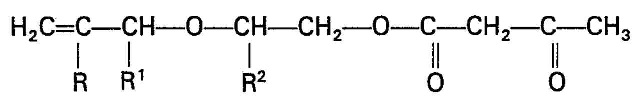

in which R is a hydrogen atom or a methyl group, $R^1$ is a hydrogen atom or an alkyl group having 1, 2 or 3 carbon atoms, and $R^2$ is a hydrogen atom or a hydrocarbon radical having from 1 to 8 carbon atoms and optionally containing one or several oxygen atoms or a halogen atom, or a mixture of these ethers, together with

B. at least one olefinically unsaturated compound of formula (XI)

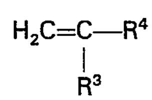

in which $R^3$ is a hydrogen atom or a methyl group, and $R^4$ represents (a) a hydrogen atom or an alkyl radical having from 1 to 5 carbon atoms, (b) a carbocyclic or heterocyclic radical having 5 or 6 ring members, (c) an alkoxy radical having from 1 to 4 carbon atoms, (d) an alkylcarboxy radical having from 2 to 18 carbon atoms, (e) a nitrile group, (f) a halogen atom, (g) a carboxyl group or sulfo group, (h) an alkoxycarbonyl radical having from 2 to 12 carbon atoms, (i) an aminocarbonyl radical, or (k) a vinyl radical, the weight ratio of the component A to the component B being in the range of from 1:200 to 1:10.

2. The process of claim 1, which comprises carrying out the polymerization in aqueous emulsion at a temperature of from 20 to 100°C in the presence of an initiator and optionally in the presence of an emulsifier and/or a protective colloid.

3. Vinyl polymer obtained according to the process of claim 1.

4. Polymer dispersion obtained according to the process of claim 2.

5. Use of the polymer dispersion of claim 4 as basis for paints.